(19) **Europäisches Patentamt**

**European Patent Office**

**Office européen des brevets**

(11) **EP 1 736 872 A2**

(12) **EUROPEAN PATENT APPLICATION**

(43) Date of publication:
**27.12.2006 Bulletin 2006/52**

(51) Int Cl.:
*G06F 9/445* (2006.01)  *G06F 9/52* (2006.01)

(21) Application number: **06113491.2**

(22) Date of filing: **04.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.06.2005 EP 05105418**

(71) Applicant: **International Business Machines Corporation**
**Armonk, N.Y. 10504 (US)**

(72) Inventors:
• **MOSSOTTO, Franco**
**00166, Roma (IT)**
• **IANNUCCI, Pietro**
**00152, Roma (IT)**
• **BENEDETTI, Fabio**
**00198, Roma (IT)**

(74) Representative: **Zerbi, Guido Maria**
**IBM France,**
**Intellectual Property Department,**
**Le Plan du Bois**
**06610 La Gaude (FR)**

(54) **Method, system and computer program for concurrent file update**

(57)    A solution is proposed in a scheduler for updating a control file (220) storing a workload plan (defining a sequence of jobs to be executed during a production day). A handler (225) has exclusive write access to the control file (for updating information relating to the state of the jobs during execution of the plan). A planner (215) that needs to write a new plan into the control file (for the next production day) notifies the handler. In response thereto, the handler makes a copy (320) of the control file for use by the planner and starts logging (335) any update that it performs on the (original) control file. Once the planner completes its work, the handler applies the logged updates to the copy of the control file (as updated by the planner). The handler can now restart working on the copy of the control file, which then replaces its original version.

FIG.2

EP 1 736 872 A2

## Description

### Field of the Invention

The present invention relates to the data processing system. More specifically, the present invention relates to the updating of shared resources in a data processing system.

### Background Art

Shared resources (such as files) are routinely used in modern data processing systems; a typical problem relating to every shared resource is the synchronisation of multiple processes that compete or interfere for its access.

Particularly, a critical situation occurs when a first process working continuously on a shared resource has an exclusive write access thereto; in this condition, a contention arises whenever a second process needs to update the same shared resource.

The only available solution is of stopping the first process for allowing the second process to update the shared resource; once the operation completes, the first process can restart working on the shared resource (as updated by the second process). However, the first process is unable to work for the whole time required by the second process to update the shared resource.

The problem is particular acute when the first process performs a critical work and the second process requires a massive update of the shared resource. In this case, any stop of the first process should be limited as much as possible; therefore, the long time required to perform the massive update of the shared resource (by the second process) would be untenable. As a result, it is necessary to delay the update (for example, to a dead period of the first process). In any case, this drawback prevents the first process to work uninterruptedly.

A typical example is that of a scheduler, which is used to control the execution of jobs in a data processing system. The jobs are executed according to a workload plan (defining their correct sequence). The plan is managed by a handler, which submits the jobs and maintains information about their current state up-to-date in the plan. For this purpose, the handler must have exclusive write access to a control file storing the plan. The plan is instead generated for a predefined production period by a planner. This operation requires the addition and the removal of thousands of jobs to/from the control file; therefore, the generation of a (new) plan is not possible while the (previous) plan is in execution.

All of the above requires a dedicated time window before every production period for the writing of the corresponding plan into the control file. As a result, the scheduler is not able to work uninterruptedly 24 hours per day. This adversely affects the performance of the system; particularly, it is not possible to exploit the available hardware/software resources to their best.

### Summary of the Invention

According to the present invention, the idea of logging the updates for their application is suggested.

Particularly, an aspect of the invention proposes a method for updating a shared resource in a data processing system; this operation is performed by a first process and a second process in mutual exclusion. The method starts with the first process that accesses the shared resource for applying first updates. The second process notifies a request to the first process; the request is for applying one or more second updates to the shared resource. A copy of the shared resource is made in response to the request. The method continues by logging an indication of each first update. At the same time, the second updates are applied to a selected resource between the shared resource and its copy. In response to the completion of the application of the second updates, each logged first update is applied to the selected resource. The method ends by causing the first process to access the selected resource.

In a preferred embodiment of the invention, the first and the second updates are commutative.

Typically, the first updates are also applied to the unselected shared resource.

As a further enhancement, the first updates are event-driven (so that only an indication of those events is logged).

Preferably, the application of the second updates takes a time longer than the one of each first update.

The proposed solution typically finds application in a scheduler (for updating a plan).

In a specific embodiment of the invention, the processes are a handler and a planner of the scheduler.

Advantageously, the handler updates execution information of each pending work unit and the planner inserts new work units or removes completed work units.

A further aspect of the present invention proposes a computer program for performing the above-described method.

Moreover, another aspect of the present invention proposes a corresponding system.

The characterizing features of the present invention are set forth in the appended claims. The invention itself, however, as well as further features and the advantages thereof will be best understood by reference to the following detailed description, given purely by way of a nonrestrictive indication, to be read in conjunction with the accompanying drawings.

### Reference to the drawings

Figure 1a is a schematic block diagram of a data processing system in which the solution according to an embodiment of the invention is applicable;
Figure 1b shows the functional blocks of an exemplary scheduling server of the system;
Figure 2 depicts the main software components that can be used for implementing the solution according to an embodiment of the invention; and
Figures 3a-3i show the sequence of operations executed during a process implementing the solution according to an embodiment of the invention.

## Detailed Description

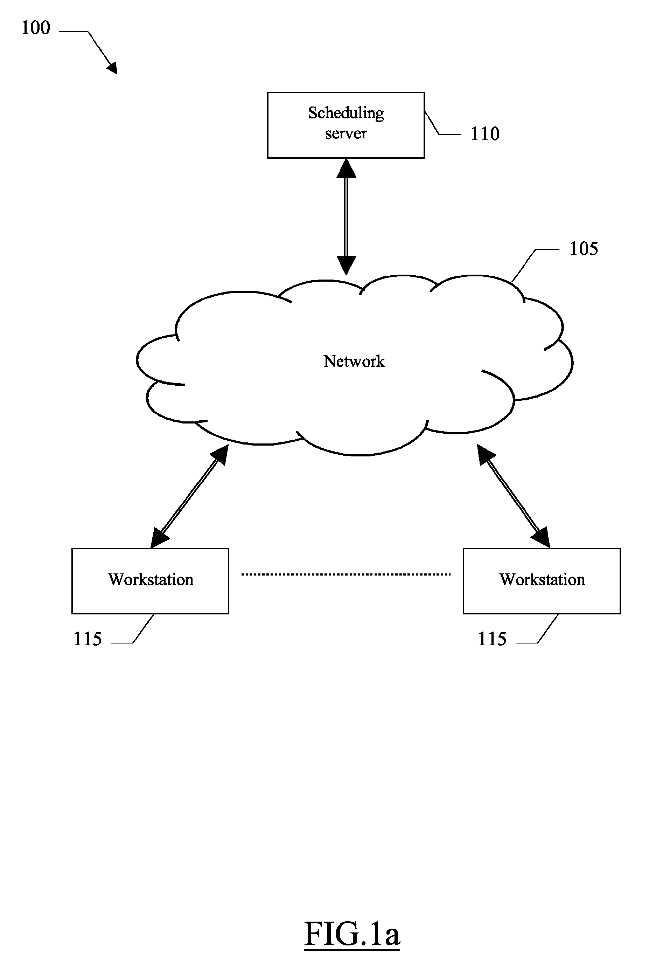

With reference in particular to Figure 1a, a schematic block diagram of a data processing system 100 is illustrated. The system 100 has a distributed architecture based on a network 105 (typically consisting of the Internet). Particularly, a central scheduling server 110 is used to automate, monitor and control the execution of work units through the entire system 100. Typically, the work units consist of non-interactive jobs (for example, payroll programs, cost analysis applications, and the like), which are to be executed on multiple workstations 115. For this purpose, the scheduling server 110 and the workstations 115 communicate through the network 105.

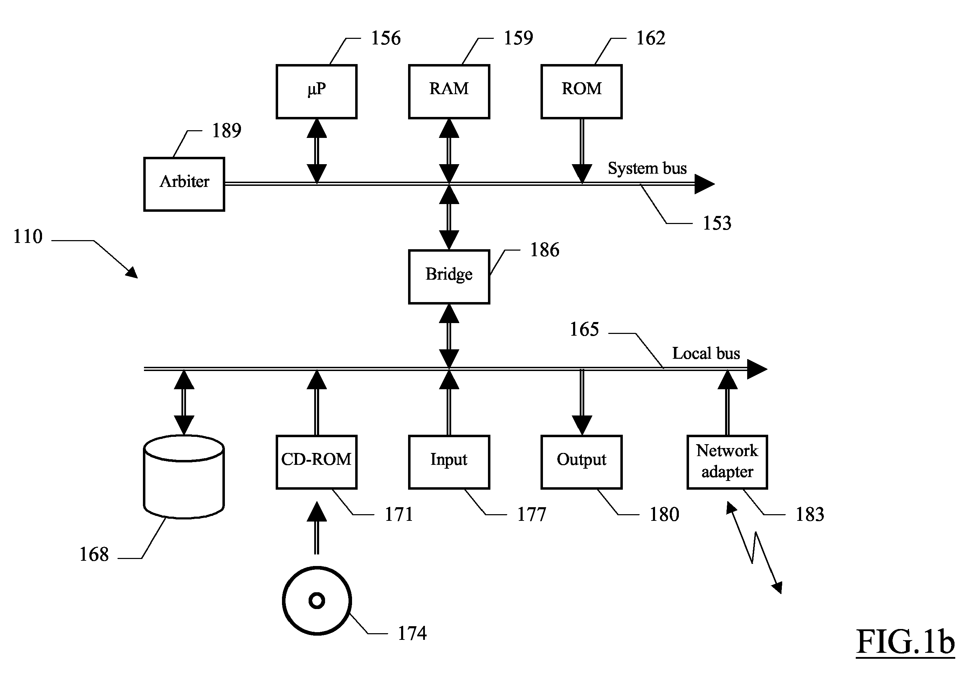

An exemplary implementation of the scheduling server 110 is shown in Figure 1b. Particularly, the scheduling server 110 is formed by several units that are connected in parallel to a system bus 153. In detail, one or more microprocessors ($\mu$P) 156 control operation of the scheduling server 110; a RAM 159 is directly used as a working memory by the microprocessors 156, and a ROM 162 stores basic code for a bootstrap of the scheduling server 110. Several peripheral units are clustered around a local bus 165 (by means of respective interfaces). Particularly, a mass memory consists of one or more hard-disks 168 and a drive 171 for reading CD-ROMs 174. Moreover, the scheduling server 110 includes input units 177 (for example, a keyboard and a mouse), and output units 180 (for example, a monitor and a printer). An adapter 183 is used to connect the scheduling server 110 to the network. A bridge unit 186 interfaces the system bus 153 with the local bus 165. Each microprocessor 156 and the bridge unit 186 can operate as master agents requesting an access to the system bus 153 for transmitting information. An arbiter 189 manages the granting of the access with mutual exclusion to the system bus 153.

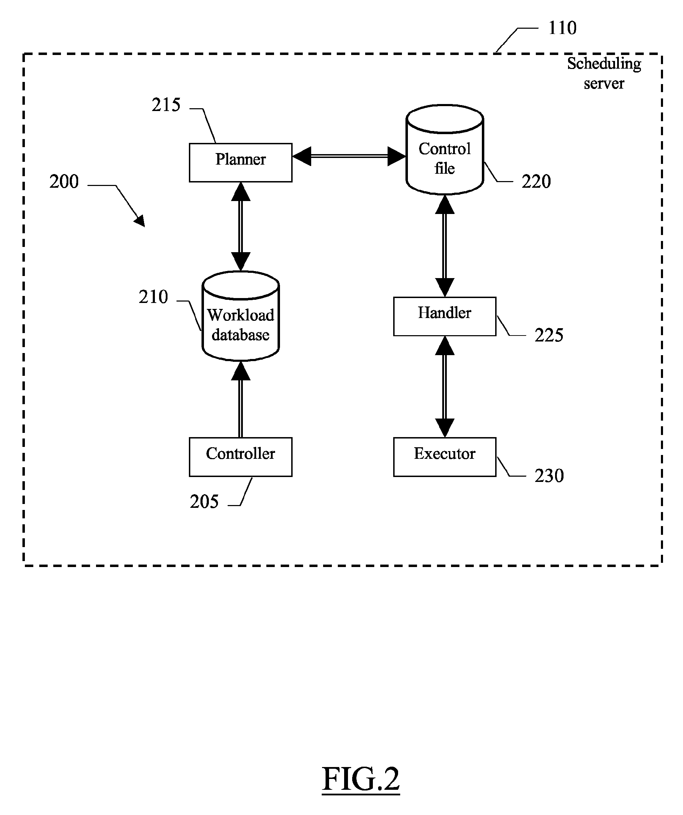

Moving now to Figure 2, a partial content of the working memory of the scheduling server 110 in operation is illustrated. The information (programs and data) is typically stored on the hard-disk and loaded (at least partially) into the working memory of the scheduling server 110 when the programs are running, together with an operating system and other application programs (not shown in the figure). The programs are initially installed onto the hard disk, for example, from CD-ROM.

Particularly, the scheduling server 110 runs a corresponding application 200 (for example, the "IBM Tivoli Workload Scheduler or TWS" by IBM Corporation). The scheduler 200 includes a controller 205 (such as the "Composer" program of the above-mentioned TWS), which is used to manage a workload database 210.

The workload database 210 contains the definition of the whole scheduling environment. Particularly, the workload database 210 stores a representation of the topology of the system (i.e., the workstations with their connections) and of the hardware/software resources that are available for the execution of the jobs. The workload database 210 also includes a descriptor of each job (written in a suitable control language, for example, XML-based). The job descriptor specifies the programs to be invoked, their arguments and environmental variables. Moreover, the job descriptor indicates any dependencies of the job (i.e., conditions that must be met before the job can start); exemplary dependencies are time constraints (such as a specific day, an earliest time or a latest time for its submission, or a maximum allowable duration), sequence constraints (such as the successful completion of other jobs), or enabling constraints (such as the entering of a response to a prompt by an operator). The job descriptor also specifies the (physical or logical) resources that are required by the job; those resources can be seen as a particular type of dependency, which conditions the execution of the job to their availability. Generally, the jobs are organized into streams; each job stream consists of an ordered sequence of jobs to be run as a single work unit respecting predefined dependencies (for example, jobs to be executed on the same day or using common resources). For the sake of simplicity, the term job will be used from now on to denote either a single job or a job stream (unless otherwise specified). The workload database 210 also stores statistics information relating to the execution of the jobs (such as a log of their duration from which a corresponding estimated duration may be inferred).

A planner 215 (such as the "Master Domain Manager" of the TWS) creates a workload plan, which consists of a batch of jobs (together with their dependencies) scheduled for execution on a specific production period (typically, one day); the plan is stored into a corresponding control file 220 (such as the "Symphony" of the TWS). A new plan is generally created automatically before every production day. For this purpose, the planner 215 processes the information available in the workload database 210 so as to select the jobs to be run and to arrange them in the desired sequence (according to their specifications). Typically, the planner 215 updates the control file by adding the jobs so obtained (for the next production day) and by removing the pre-existing jobs (of the previous production day) that have been completed; it should be noted that this operation involves a massive change to the control file 220 (with the addition and the removal of thousands of jobs). In addition, the jobs of the previous production day that did not complete successfully or that are still running or waiting to be run can be maintained in the plan (for execution during the next production day).

A handler 225 (such as the "Batchman" process in the TWS) starts the plan at the beginning of every production day (for example, at 6:00 AM). After the plan has started, the handler 225 takes exclusive write access to the control file 220. Whenever a new job of the plan must be submitted for execution, the handler 225 notifies an executor 230 (such as the "Jobman" process in the TWS). The executor 230 directly controls the launching and the tracking of the job (for example, interfacing with corresponding agents running on the different workstations). The executor 230 returns feedback information about the execution of the job to the handler 225 (for example, whether the job has been completed successfully, its actual duration, and the like); the handler 225 enters this information into the control file 220. In this way, the control file 220 is continuously updated so as to provide a real-time picture of the current state of all the jobs of the plan. At the end of the production day, the planner 215 accesses the control file 220 for updating the statistics information relating to the executed jobs in the workload database 210.

In the above-described scenario, it is necessary to have a dedicated time window before every production day for allowing the planner 215 to write the corresponding new plan into the control file 220. Indeed, the handler 225 must have exclusive write access to the control file 220 during the execution of every plan; the operation of the handler 225 is very critical, so that its stops must be limited as much as possible. On the other hand, as pointed out in the foregoing, the writing of any new plan into the control file 220 (by the planner 215) involves a massive update that typically takes a quite long time (of the order of some tens of minutes). Therefore, it is not possible to perform the operation while the previous plan is in execution. As a result, the scheduler 200 is not able to work uninterruptedly 24 hours per day.

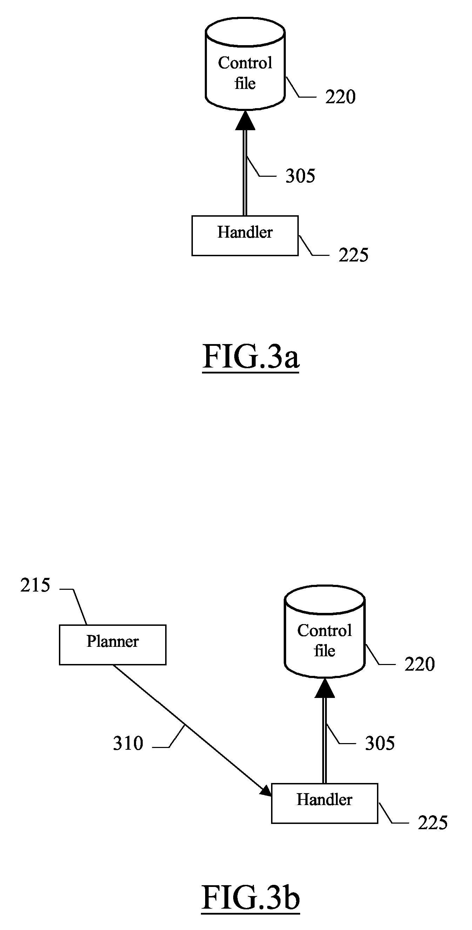

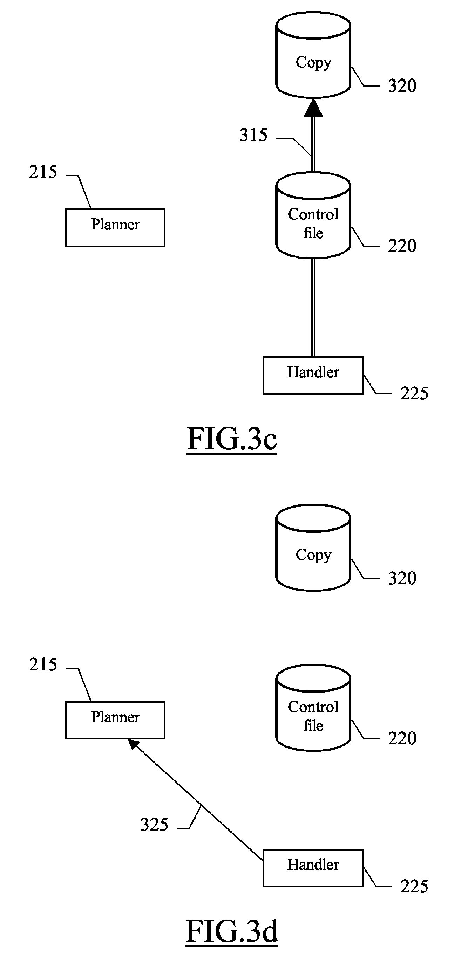

A solution that allows writing a new plan into the control file 220 by the planner 215 without substantially stopping operation of the handler 225 is illustrated in the Figures 3a-3i.

Starting from Figure 3a, the handler 225 accesses the control file 220 for updating its content (bold arrow 305); in this phase, the control file 220 is owned exclusively by the handler 225 (with any other process that can read it at most).

Passing to Figure 3b, let us assume now that the planner 215 wishes to write a new plan into the control file 220. To this end, the planner 215 notifies the handler 225 accordingly (thin arrow 310).

The process continues to Figure 3c, wherein the handler 225 stops working in response to the request received from the planner 215. The handler 225 then makes a copy (bold arrow 315) of the control file 220 (denoted with 320).

As shown in Figure 3d, the handler 225 notifies the planner 215 as soon as the operation completes (thin arrow 325). It should be noted that the time required for copying the control file 220 is very short (of the order of a few seconds).

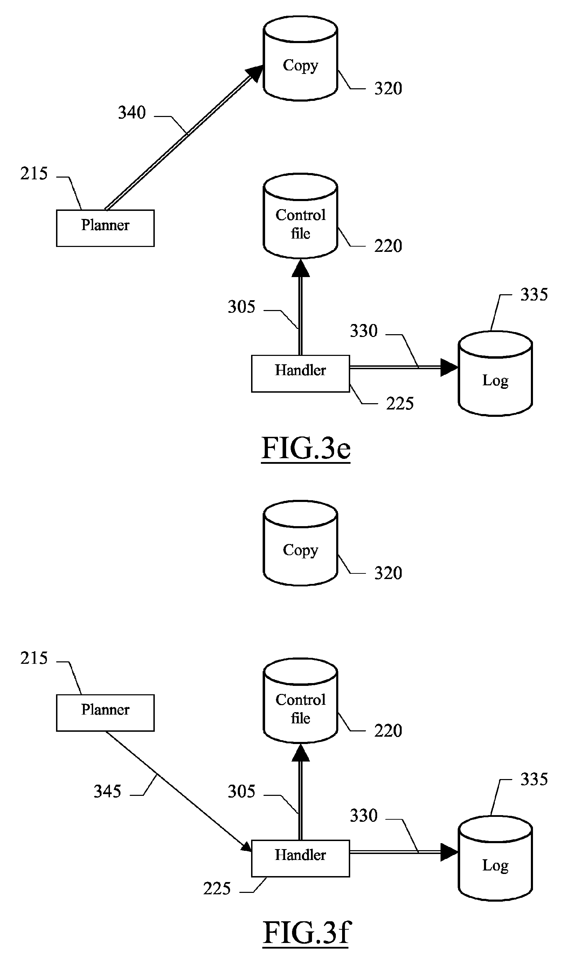

With reference now to Figure 3e, the handler 225 can restart working (bold arrow 305) on the control file 220; however, an indication of all the updates performed on the control file 220 is saved (bold arrow 330) into a corresponding log 335. Preferably, the log 335 only stores the events that cause the handler 225 to act on the control file 220 (i.e., the feedback information returned by the executor when a job completes either successfully or in error). At the same time, the planner 215 can start writing the new plan (bold arrow 340) into the copy of the control file 320.

The flow of activity continues to Figure 3f. As soon as the planner 215 completes the operation, it notifies the handler 225 accordingly (thin arrow 345).

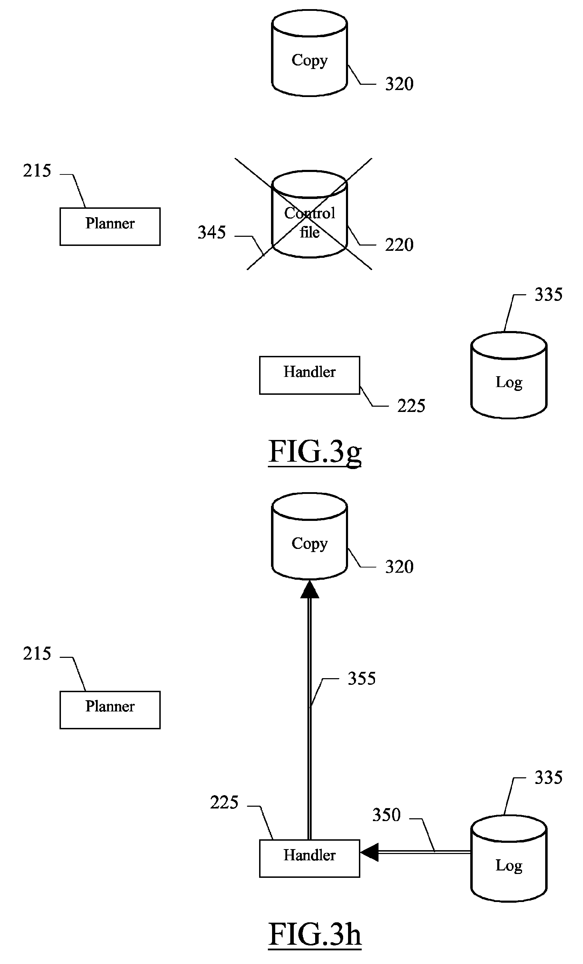

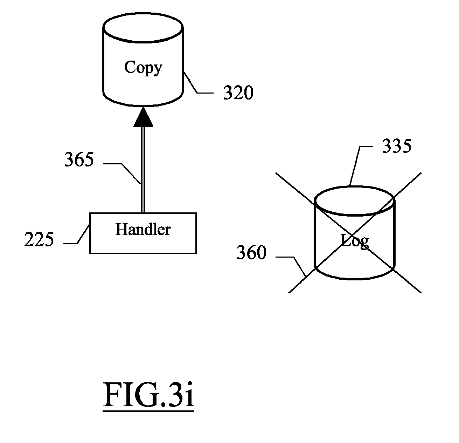

In response thereto, as shown in Figure 3g, the handler 225 stops working again. The handler 225 then deletes the original control file 220 (cross 345).

Continuing to Figure 3h, the handler 225 reapplies all the updates made to the (original) control file to the corresponding copy 320. For this purpose, the handler 225 extracts (bold arrow 350) the events saved in the log 335 in succession; the update corresponding to each event is then applied (bold arrow 355) to the copy of the control file 320. In this case as well, the time required for the operation is very short (of the order of a few seconds) since the frequency of completion of the jobs (defining the corresponding logged events) is relatively low.

The process ends at Figure 3i, wherein the handler 225 deletes the log 320 (cross 360). The handler 225 can then restart working (bold arrow 365) on the copy of the control file 320, which then replaces its original version.

It is pointed out that the content of the control file at the end of the process is exactly the same that would have been obtained if the handler 225 had been stopped for allowing the planner 215 to write the new plan. Indeed, the handler 225 only updates information relating to the state of the jobs that have not been completed yet (when the copy of the control file 320 is performed). Conversely, the planner 215 only inserts new jobs or removes jobs that have already been completed at the same time. In other words, the handler 225 and the planner 215 act on subsets of the jobs (in the control file 220) that are disjoint. This ensures that the updates saved in the log 335 (while the planner is updating the copy of the control file 320) will always relate to jobs that are not affected by the operations performed by the planner 215.

More formally, let us denote with "c" the content of the control file. The updates applied by the handler 225 are indicated by a function H(), while the updates applied by the planner 215 are indicated by another function P(). The above-mentioned condition is satisfied when the functions H() and P() are commutative, that is:

$$P()\,°\,H()=H()\,°\,P(),$$

or

$$H(P(c))=P(H(c)).$$

The above-described solution only requires very short stops of the handler for copying the control file and for applying the logged updates (irrespective of the time for writing the new plan).

In this way, the new plan can be written into the control file while the previous plan is in execution. As a result, it is now possible to have the scheduler work continuously 24 hours per day.

This has a beneficial affect on the performance of the system; particularly, it allows exploiting the available resources to their best (without any dead time).

Naturally, in order to satisfy local and specific requirements, a person skilled in the art may apply to the solution described above many modifications and alterations. Particularly, although the present invention has been described with a certain degree of particularity with reference to preferred embodiment(s) thereof, it should be understood that various omissions, substitutions and changes in the form and details as well as other embodiments are possible; moreover, it is expressly intended that specific elements and/or method steps described in connection with any disclosed embodiment of the invention may be incorporated in any other embodiment as a general matter of design choice.

For example, similar considerations apply if the system has a different architecture or includes equivalent units. Moreover, each computer may have another structure or may include similar elements (such as cache memories temporarily storing the programs or parts thereof to reduce the accesses to the mass memory during execution); in any case, it is possible to replace the computer with any code execution entity (such as a PDA, a mobile phone, and the like).

In any case, the invention has equal applicability to equivalent schedulers (for example, having another architecture, working on a single computer, or used to control the execution of other work units such as interactive tasks). Alternatively, the proposed solution is used to update different memory structures (such as a table), or by other modules of the scheduler even performing different operations (such as the controller).

However, the reference to the scheduler is not to be intended as a limitation. Indeed, the solution of the invention can be used to update any shared resource by generic processes. For example, the resource may be a database, a software application, or the configuration of a hardware device; likewise, the processes may be different software programs (even remote to each other), computers, subjects, and the like. In addition, the term update as used herein refers to any operation intended to modify the resource (for example, involving an addition, deletion, or change to any aspect relating to the resource or a part thereof).

It should be readily apparent that the same result may be achieved if the handler works on the copy of the original control file while the planner updates its original version. Moreover, nothing prevents having the planner perform the copy of the control file (instead of the handler). The order of same operations may also be changed without affecting the result of the process (such as by deleting both the original control file and the log at the end); likewise, it is possible to retain this information for a predefined period (for example, for security reasons).

The concepts of the present invention are also applicable when the updates (applied by the two processes) are not commutative, but any difference resulting from their order of application to the shared resource is acceptable. For example, this is possible when the differences only relate to minor information that is not vital for the specific application, or when the first process (normally controlling the shared resource) overrides or disregards the differences introduced by the second process (during its massive update).

In another embodiment of the invention, the handler may log the updates only without actually changing the control file (for example, when every update is independent of the previous ones); in this case, these updates are applied only once after the planner completes the writing of the new plan.

The solution of the invention lends itself to be applied even when the handler is not event-driven; in any case, it is always possible to log the actual updates that are applied to the control file by the handler (or any equivalent indication thereof).

Even if the proposed solution has been specifically devised for performing massive updates to the shared resource, this is not to be interpreted in a limitative manner. More generally, the technical idea of the invention may be applied to any kind of processes (even when they involve different numbers of updates of any length).

Similar considerations apply if the program (which may be used to implement the invention) is structured in a different way, or if additional modules or functions are provided; likewise, the memory structures may be of other types, or may be replaced with equivalent entities (not necessarily consisting of physical storage media). Moreover, the proposed solution lends itself to be implemented with an equivalent method (for example, with similar or additional steps). In any case, the program may take any form suitable to be used by or in connection with any data processing system, such as external or resident software, firmware, or microcode (either in object code or in source code). Moreover, the program may be provided on any computer-usable medium; the medium can be any element suitable to contain, store, communicate, propagate, or transfer the program. Examples of such medium are fixed disks (where the program can be pre-loaded), removable disks, tapes, cards, wires, fibers, wireless connections, networks, broadcast waves, and the like; for example, the medium may be of the electronic, magnetic, optical, electromagnetic, infrared, or semiconductor type.

In any case, the solution according to the present invention lends itself to be carried out with a hardware structure (for example, integrated in a chip of semiconductor material), or with a combination of software and hardware.

**Claims**

1. A method (305-365) for updating a shared resource (220) in a data processing system by a first process (225) and a second process (215) in mutual exclusion, the method including the steps of:

   the first process accessing (305) the shared resource for applying first updates,
   the second process notifying (310) a request to the first process for applying at least one second update to the shared resource,
   making (315) a copy (320) of the shared resource in response to the request,
   logging (330) an indication of each first update,
   applying (340) the at least one second update to a selected resource between the shared resource and the copy of the shared resource,
   applying (350,355) each logged first update to the selected resource in response to the completion of the application of the at least one second update, and
   causing (365) the first process to access the selected resource.

2. The method (305-365) according to claim 1, wherein the first updates and the at least one second update are commutative.

3. The method (305-365) according to claim 1 or 2, further including the step of:

   applying (305) each first update to the unselected resource (220).

4. The method (305-365) according to any claim from 1 to 3, wherein each first update is driven by an event being notified to the first process, the step of logging (330) the indication of each first update including:

   storing (330) an indication of the corresponding event.

5. The method (305-365) according to any claim from 1 to 4, wherein the at least one second update consists of a plurality of second updates, an application time of the second updates being substantially higher than the application time of each first update.

6. The method (305-365) according to any claim from 1 to 5, wherein the shared resource consists of a memory structure (220) storing a plan of a scheduling application (200), the plan including an indication of a plurality of work units to be executed on the data processing system (100).

7. The method (305-365) according to claim 6, wherein the first process is a handler (225) for storing an indication of the execution state of each work unit in the memory structure (220) and the second process (215) is a planner for writing the plan for a predefined period in the memory structure.

8. The method (305-365) according to claim 7, wherein the handler (225) is adapted to update the indication of the execution state of each pending work unit and wherein the planner (215) is adapted to insert new work units or to remove completed work units.

9. A computer program (200) for performing the method of any claim from 1 to 8 when the computer program is executed on a data processing system (110).

10. A system (110) including means (200) for performing the steps of the method according to any claim from 1 to 8.

100

Scheduling
server — 110

105

Network

Workstation ............................... Workstation

115 115

FIG.1a

FIG.1b

EP 1 736 872 A2

FIG.2

**FIG.3a**

**FIG.3b**

Copy — 320

315

Control
file — 220

215

Planner

Handler — 225

## FIG.3c

Copy — 320

215

Planner

Control
file — 220

325

Handler — 225

## FIG.3d

320

Copy

340

215

Planner

Control
file

220

305

335

330

Handler

Log

225

## FIG.3e

Copy

320

215

Planner

Control
file

220

345

305

335

330

225

Handler

Log

## FIG.3f

**FIG.3g**

**FIG.3h**

Copy

— 320

365 —

335

225 — Handler

360 —

Log

## FIG.3i